# EUROPEAN PATENT APPLICATION

(11) **EP 3 284 621 A2**
(43) Date of publication of application: **21.02.2018**
(21) Application number: 16739282.8
(22) Date of filing: 14.04.2016
(51) Int. Cl.: B60H 1/00, B60H 1/24

(54) **VEHICLE VENTILATION SYSTEM**

(30) Priority: 14.04.2015 RU 2015113723; 13.10.2015 RU 2015143706
(71) Applicant: Obschestvo S Ogranichennoi Otvetstvennostiyu "Autex Ltd.", Moscow 125315 (RU)
(72) Inventor: KIRPICHNIKOV, Alexei Petrovich, Moscow 117485 (RU); KOVALCHUK, Roman Sergeevich, Moscow 115035 (RU)
(74) Representative: Schulz Junghans Patentanwälte PartGmbB
(86) International application number: PCT/RU2016/000216
(87) International publication number: WO 2016/167690

(57) **Abstract**

The group of inventions can be used for creating selective "smart" air-conditioning and ventilation systems for vehicle interiors and cabins, railway passenger carriages, etc. In the first embodiment the ventilation system comprises a sensing element for recognizing the fact of exhalation (of one or several passengers) and the means to exhaust (extract) the air from the interior of the vehicle, wherein the means of air exhaust are configured to remove mainly a portion of air exhaled by passengers. In the second embodiment the air outlets of the ventilation system are located in a zone of spreading of the exhaled air stream and the direction of the streams from the air supply means contributes to exhaust of exhaled air. Additionally, such system can be equipped with sensors of respiration that allows to extract the air masses with maximum concentration of the exhalation products. All aforesaid allows to improve the efficiency of ventilation systems where it is impossible to ensure an adequate supply of clean air.

## Description

The present invention may be used in automotive industry, rail transport and aircraft building for constructing selective intelligent vehicle ventilation and air conditioning systems for passenger compartments and cabins, particularly in cases of inability or reluctance to provide sufficient air exchange with the ambient air by using the main ventilation system due to polluted environment, or to the operation of the system in a self-contained mode or for the purpose of energy saving.

It is known that in the urban traffic congestion it is reasonable to drive in mode close to the system isolated from the external environment (i.e. almost without an inflow of outside air). Although the oxygen reserve in the passenger compartment may be sufficient for a person for more than 1 hour, the effect of stuffiness and later of poisoning appears much earlier (in 5-10 minutes) because of unacceptable increase of carbon dioxide (CO2) concentration. This happens due to the fact that the concentration of CO2 in the ambient air is about 0,04...0,1% and the value of 0,5% is already harmful for an ability to concentrate and working capacity (what is important for a driver) while the air exhaled by a person contains about 3-4% of CO2. In case of a car the situation is exacerbated by the fact that an exhale contains a lot of water vapor that condenses on car glasses and reduces visibility.

In a modern metropolis the specific time for a car permanently standing in a traffic congestion (that is under conditions of air pollution and exceeding of MPC for a number of poisoning gases) has increased from minutes to hours. At the same time, if the internal circulation mode is used, all participants of traffic are in the same conditions (up to the size and height of the vehicle) regardless of vehicle class and the modern cabin filters are virtually unable to provide preferences for clean air for children or, for example, for people with respiratory diseases. This necessitates the use of special means and systems aimed at preserving the internal unpolluted air volume (in the passenger compartment) maximum clean and free of exhaled waste products as long as possible, while the supplied ambient air, if needed, should be maximum filtered and purified from outside pollutants. The standard scheme of ventilation system used, for example, in passenger cars does not meet the said requirements: switching to internal circulation mode in such systems causes the increasing of amount of carbon dioxide up to 2000 ppm and more in a few minutes. This is not only hygienically harmful (particularly for people with such diseases as diabetes at the early stages, vascular and respiratory diseases), but can be dangerous on the roads since it is experimentally proved that under these conditions the driver's concentration reduces while the fatigue sharply grows what dramatically increases the probability of negative scenarios.

The height of the vehicle determines in turn the geometric height of air intake above the surface level and it is usually at the level of the hood, i.e. 0.6-0.9 m above the road where the concentration level of most pollutants is maximum (at a height of 2 m it can already reduce in 3-5 times). And since the cars stuck in traffic and roadside buildings block the movement of air masses and if there is no wind blowing, the stratification begins that expresses in distribution of gases and other pollutants in dependence on their densities. At the same time, nitrogen and oxygen with smaller masses are displaced upward (this especially affects in hot climates when the temperature difference between an exhaust and the environment decreases).

From prior art the various vehicle ventilation and air conditioning systems are known, that generally comprise the means of air supply, of air exhaust and recirculation, a conditioner for heating or cooling of supplied or recycled air and various controls of air intake process, air humidity, purity, etc. (see, for example, application RU 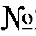 2011127891/11, 07.07.2011, F01P7/00).

Such ventilation systems provide the maintenance of temperature and air composition inside the vehicle interior integrally and insufficiently economical and effective. Moreover the intake of air from the environment is deliberately taken in excess of volume and without a preliminary analysis of its composition that also degrades the efficiency of the system.

Attempts to retrofit the ventilation systems, for example, by adding carbon dioxide (CO2) sensor located near the outlet manifold (see patent Japan 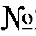 2001153417 (A), F24F7/08, 2001-06-08) or to create the systems wherein the smoke sensors are used for preventing the spread of tobacco smoke inside the passenger compartment in such a way that if the smoke pollution is detected above the driver's seat, the ventilation system lets the smoke-filled air out of the interior (see patent Japan 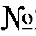 60252019, B60H1/24, 12.12.1985) or to equip the ventilation systems with extra devices that supply the clean air to the rear part of the passenger compartment through an air duct placed in the back of the driver's seat and with assistance of a fan placed in the back panel of this seat (see application USA 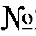 2015140915, 2015-05-21, B60N2/56) do not solve the problem of high efficiency, cost-effectiveness or autonomy of the ventilation systems. Thus, the means of air exhaust and release from the passenger compartment are rigidly fixed, the extraction of contaminated air from the interior occurs in a matter of urgency, non-constantly but with a pulse and by all available means simultaneously, i.e. this is impossible in a normal continuous mode of operation. Moreover, a significant amount of air from outside should be supplied to the passenger compartment to achieve the low concentration of exhalation products that causes the devices to waste considerable energy by requiring a high bandwidth, operating speed (in the case of transitional phase), availability of clean air outside or powerful filtering means what is not always justified and feasible.

Therefore, the claimed group of inventions is aimed to solve the problem of further increasing of efficiency and economy of ventilation systems for the interior of a vehicle. The technical result achieved at solving this problem is to ensure a greater degree of autonomy of ventilation system as a whole by improving the efficiency of ventilation where it is impossible to provide an adequate supply of clean air and consequently to lower power consumption where possible. Furthermore, it creates an opportunity to increase the degree of isolation of the vehicle by reducing the impact of environmental pollutants. An additional effect is an improvement of conditions for inlet air treatment and a prolongation of durability of the filters due to the general decrease of the required air supply volume.

In the first variant of the claimed vehicle ventilation system with selective extraction of exhalation products that comprises a sensing element, the means of air exhaust from the vehicle interior and the means of air supply to the vehicle interior and the controls of the mentioned means by using a signal of the sensing element the said result is achieved by the fact that the sensing element is configured to detect exhalations of the passengers and the means of air exhaust are configured to extract mainly the exhaled portion of air.

The means of air exhaust from the vehicle interior and the means of air supply to the vehicle interior may be configured to adapt to a respiratory rate of the passengers and/or to delay in spreading of the exhaled and inhaled portions of air, wherein the sensing element may be formed by a group of sensors like a carbon dioxide (CO2) sensor and/or oxygen (O2) sensor and/or humidity sensor and/or pressure sensor and/or infrared radiation sensor and/or temperature sensor and/or sound and ultrasound sensor and/or video sensor (camcorder) and/or a superimposed accelerometer and the sensors of the group are provided with a filter tuned to the respiratory rate bandwidth.

The means of air exhaust from the vehicle interior may comprise the forming for subsequent removal of portion of air exhaled by the passengers.

The means of air supply to the vehicle interior may be arranged as the forming elements for subsequent removal of portions of air exhaled by the passengers.

The means of air supply to the vehicle interior may be configured with ability to replace only the portion of air removed from the vehicle interior by the means of air exhaust.

The means of air supply to the vehicle interior may include an input analyzer of ambient air composition which is connected to the controls of the air supply means to the vehicle interior, wherein the controls may be configured to receive, record and transmit information about the ambient air composition to corresponding units of other vehicles.

The system may comprise the means for recognizing the health condition of the passengers based on signals from the sensors of the sensing element and the means for responding to dangerous state of health.

The means of air supply to the vehicle interior may have an inlet for ambient air which is located above the upper point of the vehicle body.

The means of air supply to the vehicle interior may be configured with an inlet for ambient air which is located on a movable element and the controls of the air supply means may be configured to adjust the position of the movable element in dependence on the ambient air composition and/or the vehicle speed.

The means of air supply to the vehicle interior may be configured to reserve and store an air or oxygen and the controls of means of air supply may be configured to replenish and to dose the air supply from a storage reservoir.

The controls of the means of air exhaust from the vehicle interior and the controls of the means of air supply to the vehicle interior as well as the means for adapting to the respiratory rhythm of the passengers and/or to delay in the spreading of portions of air exhaled and inhaled by the passengers, the controls of the forming elements and subsequent removal of the air streams exhaled by passengers, the means for choosing and analyzing information from the group of sensors, the means for filtering the output information from the group of sensors, the information processing unit for the analyzer of the ambient air composition and the means for recognizing health conditions of the passengers by using the signals of the sensing element may be combined into a controller which may be configured to analyze the passenger's exhaled air portions, analyze the composition of ambient air and the air in the vehicle interior and make a decision about the moment and amount of air for removing and replacing it with a portion of the ambient and/ or regenerated air; this controller may be included in the controller which controls the operation of the vehicle climate control system or may be configured to provide with recommendations about changing a distance or a route based on the data received from the analyzer of the ambient air composition or external sources.

In the second variant of the claimed vehicle ventilation system comprising the clean air supply means and the air exhaust means the claimed result is achieved by the fact that the air exhaust means are configured to remove the air polluted by products of respiration, wherein the outlets of the ventilation system are located in the zone spreading of the exhaled air.

The clean air supply means may be located primarily above the respiratory organs of the passengers and directed to them from behind and/or from the top and/or at an acute angle to the vertical and the means to remove the air polluted by products of respiration may be located below of the respiratory organs of the passengers; the clean air supply means may be also provided with a micro particles filter and/or chemical filters.

The air outlets of the means to exhaust the air polluted by the products of respiration may be located on a seat belt and/or on a steering wheel cover and/or on the front side of a seat and/or on a vehicle dashboard and connected with corresponding pumping elements via a duct system.

The air outlets of the air exhaust means for removing the air polluted by the products of respiration may be placed on a back of a seat as well as on decorative elements of the vehicle interior or on holders placed in the zone of spreading the flow of the exhaled air and connected with the corresponding pumping elements via a duct system, wherein the duct system may be configured with a matrix and/or periodic structure.

The elements of the clean air supply means may be placed on a ceiling of the vehicle interior or in the pillars and directed primarily from the top to the bottom or from the side and the zone of spreading the exhaled air flow is formed by the forming elements placed in the zone of immediate spreading the exhaled air flow and the forming elements may be configured as the elements of the clean air supply means or as the means of air recirculation for already extracted or ambient air.

The outlets may be located in the zone of spreading of the exhaled air flow which belongs to nasal and/or mouth type of breathing.

The means to exhaust the air polluted by products of respiration may be made with ability of periodic actuation or controllable and the ventilation system may be provided with a respiration sensor connected to a control input of the said means, wherein the respiration sensor is made as a carbon dioxide (CO2) sensor or humidity sensor, pyrometer or video camera with a processor for image processing or a respiration rate meter.

The controls of the clean air supply means can be configured to receive, record and transmit information about ambient air composition to corresponding units of other vehicles.

The system may be provided with the means of recognizing the health conditions of the passengers based on signals from the sensing element and also with means of responding to a dangerous state of health.

The means of clean air supply to the vehicle interior may have an inlet and/or a duct for ambient air which is located at a height of at least 1.2m above the road surface, in particular at a telescopic tube, antenna, on a rod or a cover placed at the roof of the vehicle.

The means of clean air supply to the vehicle interior may have the inlet for ambient air which is located at a movable element to adjust the position in dependence on the ambient air composition and/or the vehicle speed.

The means of air supply to the vehicle interior may be configured to store some air or oxygen or oxygen-nitrogen mixture, to replenish and dose a supply from a storage reservoir for air or oxygen or oxygen-nitrogen mixture.

The system may be configured with a control input of automatic switch-on by a signal of the ambient air analyzer, lighting, by signals from the accelerometer, video camera or speedometer.

At least two of the following elements:
- the means of switch on/off of the vehicle ventilation system as a whole;
- the controls of the means of air exhaust from the vehicle interior;
- the controls of the means of air supply to the vehicle interior;
- the means of adapting to the respiratory rhythm of the passengers and/or to the propagation delay of exhaled and inhaled portions of air;
- the controls of forming elements and subsequent removal of the air stream exhaled by passengers;
- the means of choosing and analyzing of the information from the group of sensors;
- the means of filtering output information from the group of sensors;
- the means for processing information from the analyzer of the ambient air composition and the means of recognizing the health conditions of the passengers based on the sensing element signals
may be combined into a controller managing an operation of the vehicle ventilation or be that part of the controller managing operation of the vehicle climate control system as a whole which controls the operation of the ventilation system; and the controller may be configured to provide a driver with recommendations about changing a distance or a route based on the data from the analyzer of the ambient air or external information about the environmental pollutions.

The task set by the claimed group of the inventions may be resolved due to the following.

The proposed vehicle ventilation system with selective extraction of products of exhalation operates on the principle of detecting and selecting only (mostly) a local portion of exhaled air stream (which is directed from a nose and a mouth of a passenger or a driver, hereafter - the passenger) and further replacement of exactly this portion of air (with a new portion of air that is taken from outside or regenerated air). Such selectivity greatly reduces requirements to the necessary volumes of ventilation and performance of recovery and purification equipment (membrane filters, oxygen generators, etc.). The extraction of primarily exhaled air portion means that the system is adapted to remove exactly the exhaled air and the volume of extracted air is similar to the volume of exhalation. However, this expression should not be understood as a full extraction of exhaled air and with every exhalation or inability to exhaust a slightly larger amount. In other words, the proposed technical solution includes the cases of configuration of the ventilation system to extract the standard volume that equals the average expiratory volume or the volume a little more/less than an average expiratory volume or the volume determined by the volume sensor or obtained by calculation or defined as a portion of air exhaled by passenger(s) in some other way. It is important to emphasize that the proposed ventilation system may replace the air exhaust from the vehicle interior with ambient air and/or regenerated air in any proportion determined by the said controls which are performed in this part like in known vehicle ventilation systems (vehicle climate control systems).

Such system is able to operate both continuously and on command in dependence on external conditions. Moreover, the environmental pollution may be determined both by direct measurements of the concentration of pollutants and situation-dependently by using criteria that are usually associated with areas and zones of contamination. Thus, the ventilation system may automatically turn on either on a signal of the ambient air analyzer, i. e. when increasing the concentration of harmful pollution in the environment, or, for example, when the lighting has sharply degraded in daytime, that indicates that the vehicle is either in a tunnel or in a narrow street, or on a signal of the accelerometer detecting the start at traffic lights when the vehicles accelerate together and a pollution from engine exhaust becomes maximum, or on data of the speedometer about reducing speed and a traffic jam, or on data from the video camera about a smoke or, for example, about entering in a zone of a crossroad with traffic lights, etc.

The system may have a reservoir to store some volume of clean air or oxygen. The controls of the air supply means initiate replenishing the reserves stored in the reservoir in case of good quality of outside air (using an appropriate system of valves) and utilization of the reserves in case of poor quality of the ambient air and also provide recommendations about the route if the reservoir should be urgently replenished.

Making the sensing element in form of a superimposed accelerometer means that the accelerometer is fixed on a movable base and thus it is able to detect vibrations of air in the vehicle interior (in particular, an exhalation of a passenger) or on a seat belt or in any other way which allows to detect the respiratory movements of human chest for the same purpose.

As the controls, any variations and modifications including a single controller, multiple controllers exchanging the information signals, separate circuits and control units, etc. can be used.

A feature of the sensing element is that it is intended for registration of an exhalation by one way or another and the output signal of the sensing element is used directly or after analysis and processing, with or without a delay, for running the air exhaust means that remove the portion of air exhaled by one or several passengers with increased content of carbon dioxide (CO2) and water vapor. It is supposed that if there is a certain distance between the air exhaust (air supply) means (such as, for example, ventilation slots, sockets, blinds or nozzles) and the passenger's or driver's respiratory organs, wherein this distance is a priori defined (for example, by a passenger seat), the controller has all the necessary information for removal of the exhaled portions or its replacement with a new portion of air at the right moment with the desired phase so that at the moment when the exhaled air reaches air outlets, a suction fan would be turned on and a blowing fan on the contrary should be turned on with advance which is necessary for the stream of replacing air to pass from the air inlets to the respiratory organs of the passengers. Exactly in this way should be understood the above mentioned adaptation to the respiratory rate - that is as an ability and the means to synchronize the operation of air exhaust means and air supply means with respiration, its time period, the changes of this period, delay of the spread in order to extract mainly the exhaled air and to replace mainly the just removed portion of air with an ambient air and/or air regenerated by the vehicle climate control system.

The above said, however, with regard to extraction and replacement exactly and mostly the exhalation products (portion of air exhaled by passengers) is not limited with cycle "registration of exhale- extraction of exhaled air portion, replacement of extracted air with fresh or regenerated air" but includes some variants close to the existing ones and widely used in automotive climate control systems with stationary means for air supply and exhaust managed by appropriate units or controllers. In this case, it is possible to install the sensing element recognizing the exhaled portion in the air already entrapped from the interior (avoiding its mixing at the same time), for example, based on exceeding a threshold content of CO2 and H2O or on decrease of content of O2- immediately in a duct of air exhaust from the vehicle interior. Then the controller generates a command to return the portion of air for recirculation if the concentration of CO2 and H2O are below the norms and to extract and replace if they are above the norms (return and extraction are performed by the same stationary means, a development of relevant units and mechanisms in accordance with the described algorithm does not involve a difficulty for an engineer working in this field). In this mode of the system it is not necessary to register a respiratory rate in the vehicle interior and these data can be obtained indirectly based on periodic changes in the concentration of CO2, O2, and H2O.

Similarly, the sensing element or its sensors may be located anywhere in the vehicle interior and a decision about switch-on of the air exhaust means and replacement of the extracted air is made by the controller or other controls based on the analysis of external information and a signal of the sensing element as in prior art, but with a difference that the sensing element and the controller are configured, tuned and programmed in such a way that the decision to extract another air portion would imply the preferential exhaust of portion of air with exhalation products, i. e. portion of air received from a passenger (or passengers).

It is clear that the flows of exhaled and inhaled air should be separated spatially or in time unless the streams of inhaled air are used for forming the exhaled air flow (see below). In fact, since the input of the controller is fed with the output signals from the group of sensors, within a few seconds after switch-on by measuring the period of the sensors' output signals it is possible to register an exhale or to determine that there is no increase in the concentration of carbon dioxide (CO2) or that it is steady and accordingly to keep searching the direction where the fact of exhalation would be registered (for example, by controlling the rotation angle of outlets of the air exhaust means with carbon dioxide (CO2) sensors placed inside the said means and/or humidity sensors or by transferring these means in the mode "always-on"). Furthermore, as noted above, a position of a passenger in the vehicle interior relative to outlets of the air exhaust means or a delay between the signals of the various sensors of the group (e.g., of an accelerometer or an ultrasonic sensor, which detects the interface between air layers with different concentrations of moisture, and of carbon dioxide (CO2) sensor) allow to determine or calculate a necessary interval for spread of the exhaled air portion to the outlets of the air exhaust means and from the air inlets to the respiratory organs. And the use of video camera as a sensor and subsequent image processing by known methods allows not only to determine the direction of the passenger's face (respiratory organs), but also to conclude about direction of the air flows (e.g., based on deviations and fluctuations of various light decorative items, threads and fibers, etc.) and about the fact of exhalation. It is clear that all calculations, operations, actions described herein are done by the above mentioned controls, in particular, by the controller or other control and automation means that are related to the considered ventilation system and/or are a part of the vehicle climate control system.

Another feature of the claimed ventilation system with selective extraction of exhalation products is the means of forming a stream or a portion of the exhaled air so that it does not spread all over the vehicle interior but would be transported in the most compact way from the respiratory organs to the air outlets. These means may include blast deflectors or mechanical deflectors that swirl a flow of exhaled air and limit its spread. And in the first case it is convenient to use the flows of the interior air for swirling a stream of the exhaled air, for acceleration and delivery of the next portion to the air outlets, and the ambient air supplied to the vehicle interior may be used to cut off another portion of the exhaled air, to limit it from the outside, that is to limit its spreading. That is, the forming air flows are directed from the vehicle interior to the same direction as the air exhaled by a passenger or at an acute angle while the air flows from the outside are directed towards or at an obtuse angle.

Tuning the output band-pass filters of the group sensors to the respiratory rate bandwidth means that these filters pass a signal at frequencies typical for the respiratory rate and cut off the signals of other frequencies, first of all the higher ones, that increases noise immunity of the system in whole; or that the filters sort out the information about the events of an inhale or an exhale by means of an algorithmic method in the controller. This method is most convenient in case of a steady and rhythmic breathing of a passenger, in other cases the methods described above may be additionally used.

Another feature of the system with selective exhaust of exhalation products is that the means of air supply to the vehicle interior may be provided with an input analyzer of the ambient air composition connected to the controls that manage the air supply to the vehicle interior. As a result, the said controls are able to decide whether to let an intake of the next portion of ambient air at the moment or to delay it until the moment when the car reaches less polluted area, or to take in a full portion or its part, etc. In the simplest case such decision can be taken on the fact of exceeding of concentration of carbon monoxide (CO) or carbon dioxide (CO2) or, for example, hydrogen sulfide (H2S) in the outside air. More sophisticated algorithms are discussed further.

The essence of the claimed variant of the vehicle ventilation system is that in a such ventilation system with means of air supply including air inlets and means of air exhaust, including air outlets the latter are spatially placed in the zones of the vehicle interior where the air stream with exhalation products exhaled by a driver or passengers is spread or moved. As a result the air polluted by exhalation products (mainly with CO2) is extracted from the vehicle interior and precisely from a space area or a zone of distribution of the exhaled air before it would be mixed with the rest air in the vehicle interior. So there is practically no need to replace the air totally (in contrast to the main ventilation and air conditioning system) but only a limited amount of air taken from the said zone should be exhaust that ensures reduced power consumption, increased comfort, efficiency, self-contained operation. The air supply may be of any nature including natural but the exhaust is performed individually.

In view of the foregoing, the second variant of the ventilation system is characterized by reduced air supply while preserving or even increasing a comfort for a person - that is important both in the polluted environment and when the limited air supply is used to increase the time of the interior quasi-autonomy also in the internal recirculation mode. According to claim 17, the air with exhalation products is exhaust from a spatial or geometric area of direct spread of the exhalation products. And since there are two types of breathing typical for a person with uncovered face (without a mask), two zones with the highest concentration of the exhalation products (including CO2, H2O, a nitrogen-oxygen mixture where the content of O2 is reduced to 16% and other components of exhalation) should be identified:
a) for time intervals of nasal breathing for a person who does not tilt his head this zone is located in the direction from a nose along a torso (vertically and at a slight angle), it extends from a chin to an abdomen and hips (from the level of the chin down to 75-80 cm, and at width of 50 cm (25 cm to the side of the axis) - as a rectangle or a cone;
b) for a talking person with mouth breathing the said geometric area is located in the front, in front of a neck and a lower part of face and extends to the same distance.

However, it should be noted that the exact values of the above said distance and angle are not critical. The effect is achieved due to the fact that the exhalation products entering a space sector in front of the respiratory organs of every passenger are exhaust. The extraction of exhaled air portions may be performed via air outlets (vents or ducts, the means of forming a flow and guiding it to the outlets, shutters, decorative items, etc.) located in front of the driver's or passenger's respiratory organs, at a dashboard, a steering wheel or a seat belt, on a passenger seat or its armrests - at any vehicle interior element intended for other purposes under ordinary circumstances. This becomes possible by the fact that, unlike known solutions, the small volumes of air are extracted (continuously or periodically).

The extraction may also be performed through a separate duct system (e.g. flexible tubes) incorporated in the above said structural elements of the interior without any damage for their major purpose, the structural unity, without deterioration of the parameters (of, for example, strength of a seat belt).

Additionally, saying that the zone of the spread of the exhaled air flow may be formed by the means of flow formation located in the area of the direct spread of the exhaled air, we imply that the means of air exhaust "originate" from this latter area and that the exhaled air flow is taken out by them from the zone of the immediate spread to the zone of the spreading.

It is also possible to place the forming means for air exhaust (air exhaust elements with outlets) at the intersection of the above mentioned geometric zones of the spread of the exhalation masses with different objects and surfaces of the vehicle interior located in this space. Thus, as a consequence, some items may acquire additional function of ventilation elements, including:
- a rear surface of the backrest of a driver/passenger seat in the middle and lower part thereof (for passengers in second and subsequent rows);
- the bottom of a steering wheel, on the front panel;
- a decorative item in form of a rubber or a soft toy connected via a thin hose with the system and which may be held on the abdomen or on the passenger's lap;
- any other places selected upon the mentioned algorithm or their combinations with each other and those stated above.

Note also that in cases when the connection of air ducts to the subjects used as the air exhaust elements of the ventilation system is not desirable, they may be equipped with a self-contained unit to transmit the dialed volume remotely - by a narrow-directed stream to an inlet.

The above described means of air exhaust should be combined with air supply means compensating for the removed volumes of air. At the same time the means of air supply may be unified and shared (vents in the ceiling, for example) - since the breathing process itself in case of removal and exhaust of expiration products creates the right direction of inflow of fresh air masses. But, of course, they may be also individual - in this case they should be disposed and oriented from the top, with airflows directed to the upper part of a passenger's head and on condition of "not overlapping", not crossing the flows with exhaled air stream.

In all cases the air outlet process may be either active (with a pump that creates a suction pressure and sucks the expiration products out of the geometric area) or passive if the air supply creates the necessary overpressure to remove the products.

Mention has been made of a respiration sensor, a sensing element, various sensors, an analyzer of ambient air composition, sensors of external information and a group of sensors. Despite the conditional terminology, it is assumed that all the sensors and analyzers relate to a group of sensors, which may also comprise photo- and video-registration devices, acoustic sensors, etc. The sensors of external information are, in essence, the channels for entering the data from navigation devices, of distribution of contaminants in the area, etc. to the controller. The respiration sensor controls the means of air exhaust and the sensing element registers a current state of health of a driver and passengers.

The embodiments of the system according to the second claimed variant are limited to a combination of the said air exhaust means with regard to a turn of a head as well as influence of external reflecting objects and air streams.

Along with video sensors determining the position of a face, one can use, for instance, microphones for better extraction of exhalation products providing a switch between the zones by a fact of a voice or a specific sound of mouth breathing.

As already noted the second variant of the system relates to the ventilation systems and primarily to the additional ones that operates with a reduced volume of external air supply and is most effective for cabins and passenger compartment where the fresh air supply is limited for whatever reason. The embodiments of such a system may be classified as follows:
- a "passive" system, where, according to claims 17, 18, the air is removed constantly or by pulse from geometric (space) zones with a higher concentration of exhalation products (thus for the sitting persons with nasal breathing this zones are between a chin and an abdomen. At the same time the air supply compensated for air exhaust in a correct proportion and is directed, for example, at the upper part of the head/face). The means of air supply and/or air exhaust provide the pressure drop necessary for operation of the system. The sensors may be absent.
- an "active" system - is similar to the previous one, wherein (according to claim 24) a flow formation by appropriate devices (nozzles, guides) promotes improving of the air extraction conditions what allows to extract the exhalation products inside and even outside of the geometric zone in convenient directions. The sensors may be absent.
- an "adaptive" system - is the system according to claims 28, 29, additionally completed with mechanic, electronic, optical or other sensors like a position sensor, a displacement displacement, transducers, pressure sensors, sound pressure sensor, sensor of the concentration, etc., that allows to change a direction of the streams, guides (of parameters and vortices) and to switch between the zones when the direction of breathing or passenger's position (including head movements and movements in a passenger compartment) has changed
- a "synchronous" system - is the system according to any of claims 17, 18, or 19, equipped with electronic, mechanical, optical, chemical and other sensors detecting the presence of people and/or a fact of respiration (including a local increase in concentration of exhalation products), wherein the air extraction is additionally synchronized with a respiratory rhythm and exactly the portions of air with maximum concentration of exhalation products (above a threshold level) are extracted from the geometric zones nearby the passenger to minimize the necessary air for replacement.

As follows from the above, the variants of the claimed ventilation system may be self-contained, additional to the regular vehicle climate control system and thus may be additionally installed or directly designed as a part of the main ventilation and air conditioning system. Similarly, such self-contained systems may be configured with separate sensors or to receive signals from the already available sensors of the vehicle. The degree of their automation may be various.

The essence of the solution is illustrated in the following figures.

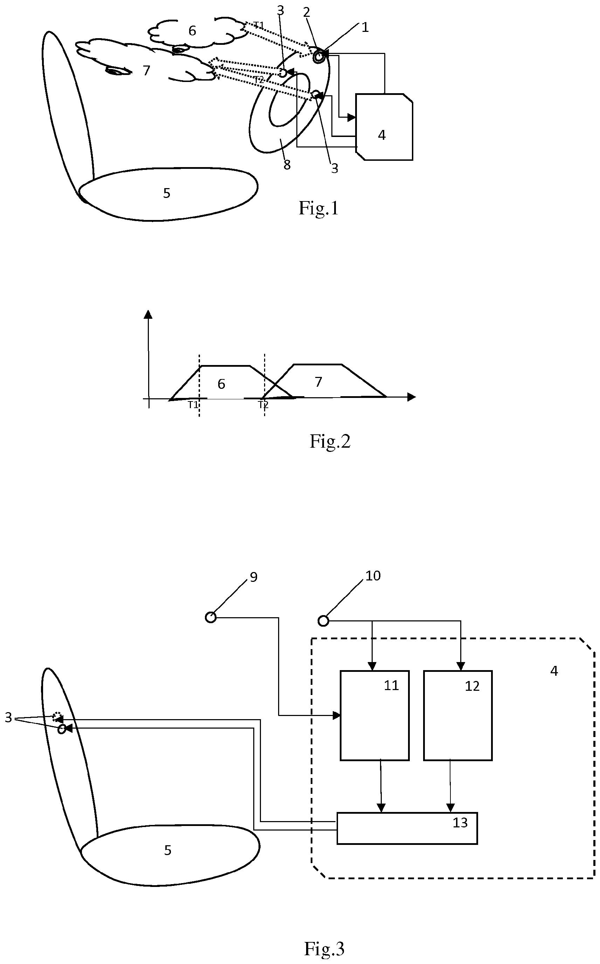

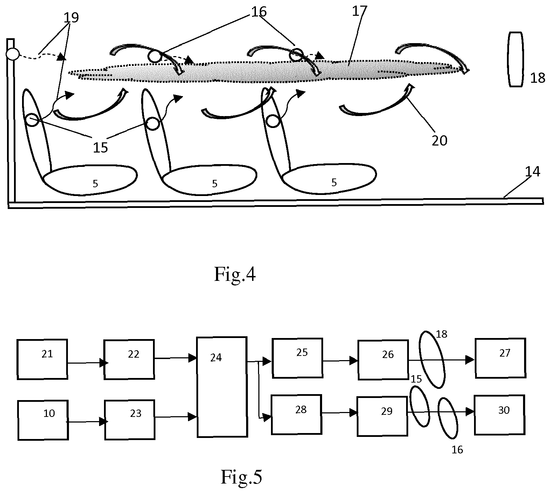

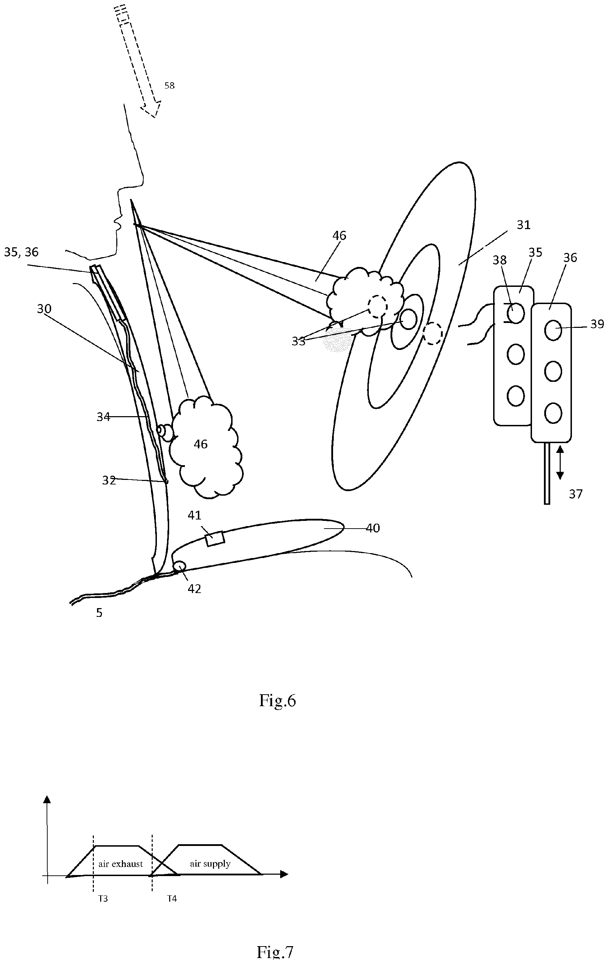

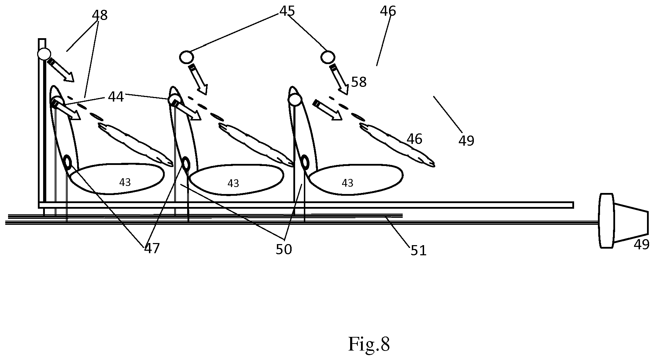

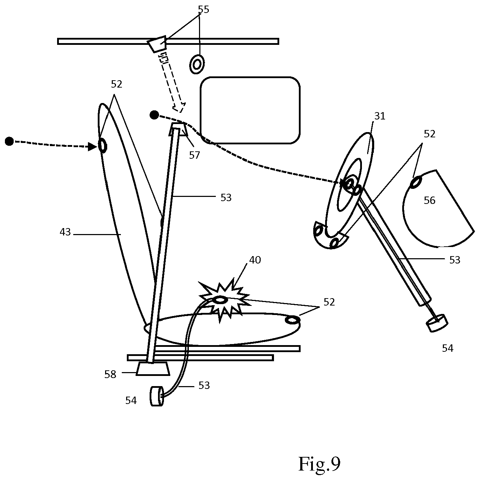

Fig. 1 - a schematic process of functioning of the claimed system with selective extraction of exhalation products; Fig.2 - timing diagram of such a system; Fig.3 - a schematic diagram of operation of the sensing element of such a system; Fig.4 - schematic embodiment of the means of air exhaust from the vehicle interior; Fig.5 - a block diagram of the claimed system with selective extraction of exhalation products; Fig.6 - a schematic process of functioning of the second variant of the claimed ventilation system; Fig.7 - timing diagram of such a system; Fig.8 - embodiment of the means of air exhaust from the vehicle interior according to such a system; Fig.9 - variants of duct arrangement according to this system;

Referring to Fig.1 the system according to the first embodiment comprises a sensing element 1, the means of air exhaust from the vehicle interior 2, the means of air supply to the vehicle interior 3, the controls (a controller) 4, wherein a passenger (a driver) is in a passenger seat 5, mark 6 denotes a portion of air exhaled by the passenger and mark 7 denotes a portion of inhaled air. Elements 1-3 are placed on a steering wheel 8 (in the embodiment in Fig.1).

Referring to Fig.2, at the moment T1 the portion of the exhaled air 6 reaches the sensing element 1, the signal thereof is analyzed by the controller 4 which switches on the means of air exhaust 2 almost at the same moment T1. Mark T2 denotes the time moment when the controller 4 switches on the means of air supply 3 for cut-off and replacement of the exhaled air portion 6 with inhaled portion 7.

Referring to Fig.3, the sensing element 1 is designed as a group of sensors, an infrared radiation or ultrasonic sensor 9, located, for example, over the passenger seat 5 and registering the moment of exhalation, and a carbon dioxide (CO2) sensor 10, disposed on the steering wheel and actuated when the portion of exhaled air 6 reaches its sensitive surface. An interval measurement unit 11 registers the current value of the time interval between the signals of sensors 9 and 10 and a frequency measurement unit 12 registers a frequency of the signal of sensor 10 (a respiratory rate, wherein averaging is possible in the block for several periods). Information about the values of the said interval and frequency is transmitted to an inlet control unit 13 that sums up the time interval between the signals of sensors 9 and 10 and interval between operations of the sensor 10 (inverse to the respiratory rate) and switches on the means of air supply 3 to the vehicle interior, installed in this example in sidewalls of the passenger seat 5. As shown in Fig.3 the output of the sensor 9 is connected to the first input of the unit 11, the outputs of sensors 9, 10 are respectively connected to the second input of the unit 11 and the input of the unit 12, the outputs of blocks 11 and 12 are connected to inputs of the unit 13, outputs thereof are connected to the control inputs of the air supply means 3 and the blocks 11-13 form the controller 4.

As noted above, the means of air exhaust from the vehicle interior may be provided with forming elements for the subsequent extraction of air stream exhaled by passengers. The formation process is explained in Fig.4 that illustrates a configuration of the means of air exhaust from the vehicle interior for use in a railway car or aircraft cabin 14 when the passenger seats 5 are mounted one after another. The right injection nozzles 15 are arranged in the sidewalls of the passenger seats 5, the injection nozzles 16 from the opposite side of the passenger seats may be arranged in the walls of the interior 14, as shown in Fig. 4, wherein the nozzles 15 and 16 are directed in such way to swirl a flow of the exhaled air 17 and to direct it to the outlet 18 with an exhaust fan mounted behind (not shown). In Fig.4. the directions of air jets from the nozzles 15, 16 are indicated with arrows 19, the directions of swirling (forming) the flow 17 - with arrows 20.

If the air from the vehicle interior is supplied to the nozzles 15, 16, the air supply to the vehicle interior is performed by other separately provided means. However, if the means of air supply to the vehicle interior are also designed to operate as the forming elements for the subsequent removing the exhaled air stream, the extra energy saving will be achieved. The operating conditions and a composition of the ambient air at the moment determines which of two mentioned variants or modes would be selected when both of them are envisaged in the vehicle. The decision may be made either by the engineers of the vehicle or by the controller 4, wherein the latter should just determine if the supply volume of outside air is sufficient to replace the exhaled air at a moment. If it is sufficient, the controller 4 activates supply of the outside air to the nozzles 15, 16 (not shown in Fig.4)by adjusting the air flows by changing the modes of inlet fans and position of shutters, if not - it supplies a mixture of outside and interior air from the passenger compartment or only the interior air. It should be noted that the means serving this purpose are widely known and used in vehicle climate control systems. Moreover, the known algorithms and the means for constructing vehicle climate control systems allow to synthesize the controls that may be proposed for any of the above described operation algorithms (variants of system construction) and their combinations. Nevertheless, further we shall describe more detailed block diagram (Fig. 5) of embodiment of the proposed system.

In this embodiment the exhalation is registered by matching the output signals of the sensor 10 and an acoustic sensor 21. For this purpose outputs of these sensors via appropriate band-pass filters 22 and 23, which are adjusted to pass bandwidth of respiratory rate and form potential output signals, come to a comparison circuit (scheme) 24, output of which via a delay circuits (schemes) 25 and 28 (τ28 <τ25, where τ - a delay of the appropriate element) controls the respective valves 26 and 29. The first valve is mounted on an air duct of a vacuum unit 27, and the second one is mounted on ducts of an air pressure unit 30. The air pressure in the unit 27 is less then atmospheric pressure and in the unit 30 is higher, so that the first portion of fresh air with delay τ28 begins to flow from the unit 30 through the nozzles 15, 16 into the interior 14, and then, with the delay τ25, flow through the outlet 18 begins to suck the portion of the exhaled air 6.

Thus, the system comprises the means of forming a suction stream, located in the direction of the exhalation or appropriately correcting the direction of flow for selective absorption of the exhaled air masses. These elements may be placed on a steering wheel, on a front panel, on a seat belt for the front passenger and on backsides of the front seats - for the rear passengers of the vehicle. However, their operation may be both continuous and in a pulse mode and focused on the fact of inhalation / exhalation (which is easily measured by various sensors remotely) and / or on the respiratory rhythm. Then on inhalation the fresh air inflow are supplied and the suction process of the exhalation stream is optimized (for example, by way of organization of discharge in the vicinity of the nearest air outlet - air extraction intake).

The air supply of the ventilation system may be focused not only on providing comfort but also on the proper formation of streams (vortices) to increase extraction of the exhaled masses (i.e., the ventilation system elements are arranged with this in mind, and a pulsating air supply mode may also be used on forecast of inhalation).

In addition, the proposed system may be used for rapid response to changes of a current state of health of a passenger, especially when the passenger suffers from various diseases. Since the usage of this system provides various additional information about the condition of the passenger (driver, pilot) as follows:
- a respiratory rate;
- a direction and movements of passenger's face (if the camcorder has a subsequent image processing);
- a heart rate (that may be obtained, for example, by modulation of the exhaled stream, etc.);
- and a quantitative personal (individual) composition of the waste products of exhalation (especially if some other gas analyzers are used in addition to CO2 sensor);
that allows to use this information for diagnostics in complex, rapidly analyze the health condition of the passenger and respond it appropriately.

So, if the system provides for determination of the respiratory rhythm, the controller may be supplemented by an analysis of the physiological parameters of the driver/ passenger and report an emergency (for example, report to the driver that the passenger with asthma, cardiac failure or other disease, seated behind, is not well and had a critical respiratory rate). It is also possible to diagnose based on a combination of the respiratory rhythm with a video image (on the accompanying facial expression, openness and eye movements, etc.). If the analysis of exhaled streams is complemented with determination of certain common and well-known in medicine components, it can personally (individually) provide a prompt emergency assistance. Thus, diabetics just before falling into a coma have a high concentration of acetone vapor in the exhalation, then the driver (if it is not himself/herself) should be provided with recommendations about measurements of a blood sugar level, a call to physicians and even urgent injection (insulin, e.g.). The additional administration of medication through the vent by inhaling is also possible, if such an individual adjustment of the system is approved by a doctor to a patient or mixtures with high oxygen content is possible to supply, etc.

In other words in the air supply streams to the passenger seat the medicine sprayed ultrasonically or nebulaized may be added (a heart or asthma medicine, etc.). Likewise it may be used to prevent driver from falling asleep by means of individual spray of the authorized invigorating preparations and flavors. Moreover, the local ventilation sub-module of the passenger seat should provide a subsequent capture and extraction of these substances of the general circulation of air masses with vapors of these substances in order to prevent their spread in the vehicle interior.

In usage for motor cars or trucks the main purpose of the system should be provision of the maximum comfort and supply with fresh air when driving is in polluted traffic jams. Even if there are no elements of air regeneration and replenishment of oxygen supplies that completely allows excluding the exchange with the ambient environment, i.e. in case of using a simplified system with supply of filtered ambient air, the technical result is a significant reduction of incoming air from the outside with all its harmful components and increase of breathing comfort. The necessary set of sensors (we mean the ambient air composition sensors for determining concentration of CO2 (carbon dioxide), O2 (oxygen), CO(carbon monoxide), etc, therein) may be used to properly adjust the air intake under varying ambient conditions (while the vehicle travels among the emissions of the surrounding vehicles it would be rather appropriate to switch briefly to the internal circulation mode or replacement sources (compressed air or oxygen) than consume excessive polluted outdoor air as well as to provide the driver with recommendations to increase a distance to the objects of high level of air pollution emission (for example, with displaying gradation of pollution measured parameters, such as carbon monoxide (CO), etc.).

Due to a substantial reduction in the volume of pumped outside air (several liters per second) even for simple variants of the proposed system the small cross-section air intake can be used and it is appropriate to position inlets as high as possible - as far as possible away from exhaust pipes to the free movement of fresh air masses. Thus, the air inlet may be arranged, for example, in a hollow structure of telescopic whip antenna or in other decorative element located above the surface of the vehicle roof. Moreover, in this case the height of the air inlet may be adjusted - with a maximum extension up to a low speed or in a traffic jam on standing - allowing by this to pick up more clean air, which is difficult to achieve in other systems with common conventional amounts and exchange for interior ventilation modes.

Referring to Fig. 6, the operation process of the second embodiment of the claimed system variants is described as follows (clean air supply tools are not indicated - the air inflow may be natural via the engine compartment and windows). In this embodiment, the air outlets are arranged on a seat belt 30 and on a steering wheel 31 (at the inner side and at the central part thereof) and consist of an air outlets 32 and 33 respectively, connected via respective air ducts (at the seat belt 30 the air duct is indicated with mark 34, at the steering wheel 31 it is not shown) to an exhaust pump that pumps out the air streams contaminated by waste products of respiration (an air flow typical for nasal breathing is taken out via the air outlets 32, an air flow typical for mouth breathing is taken out via the outlets 33). For this embodiment, when the air outlets 32 are placed on the seat belt 30, sampling synchronization tools for exhalation portions may be mechanical, for example, in form of plates 35, 36 (they are separately shown to the right in Fig.1) arranged (mounted) closer to an anchor point of the seat belt 30, wherein the plate 35 is attached motionless and 36 - with the possibility of displacement when pulling the seat belt 30 arising during driver's breathing, for example, by means of a rod 37, which is shifted due to the additional tension of the seat belt 30 on the inhalation. The said displacement causes that holes 38 in the plate 35 no longer coincide with holes 39 in the plate 36 and air is pumped out via the air outlets 32 in the seat belt 30 only on exhalation. The initial relative position of the plates 35 and 36 shall be set by the driver, after fastening the seat belt 30 at full inhalation or full exhalation by fixing the plates 35, 36 in position "start of overlapping the holes 38, 39" or "end of overlapping holes 38, 39", respectively.

According to Fig.6, the driver or the passenger of the vehicle may have on their laps a cushion (or a soft toy, pad) 40 which may be equipped with a respiration sensor (as well as a sensor element) 41 that controls the operation of a valve 42 at the inlet of the flexible hose (duct 34) connected to the suction pump. Either this device takes out the air continuously and independently of the sensor and selection of the portions of air with a high content of CO2 already occurs in the duct system, where the corresponding pair of a sensor-a controlled valve allows removing portions of air from the system or return them to the recirculation, for example.

The system according to the second embodiment was developed on the basis of a series of experiments that gave, in particular, the following results: when comparing the readings of two sensors of carbon dioxide concentration in the vehicle, wherein one is fixed in area between a steering wheel and a driver's abdomen and the second one is set on an empty passenger seat to the right the differences of readings were found while slow travelling through the city, wherein if only nose breathing of the driver the difference was in 3 - 3.5 times (2900 ppm vs. 820 ppm) and if talking on the phone and with partial mouth breathing it was in 1,7 - 2,5 times (1600 ppm vs. 830 ppm). Consequently, the effectiveness of even the simplest proposed ventilation system lies at the range from 2 to 3, if this system ignores the type of respiration and is not synchronized with it. Further, when the vehicle ventilation system was switched to the operation in mode of internal recirculation, the concentration of carbon dioxide (CO2) around the passenger seat already rose from 800 ppm to 1500ppm in 2-3 minutes (it strongly depends on the direction of the face, the circulation in the passenger compartment and therefore a path of spread of the driver's expiratory air masses) and then smoothly grew at 100 ppm per minute. Thus, the concentration of carbon dioxide quickly reaches the value which affects focusing on skills and abilities and is harmful to health as a whole. When, according to this proposal, the air exhaust of exhalation waste products from the area between the bottom of the steering wheel and the driver's abdomen and minimum necessary fresh air supply for replacement were provided, the speed of increase of the carbon dioxide concentration immediately dropped, increasing 3-5 times the self-contained life in a traffic jam at acceptable levels of carbon dioxide concentration. A further application of the sensor to synchronize the ventilation system with an exhalation increased the positive effect and at the same time reduced the necessary air supply for replacement. At the same time (on measurements) the inflow of contaminating micro-particles and N02 sharply reduced as compared to operation of the standard car's ventilation system.

Referring to Fig.7, a timing diagram of operation of the ventilation system according to Fig.6 shows that at [time] moment T3 the portion of the passenger's exhaled air reaches a breath sensor 41, the signal thereof is analyzed by the controller (not shown in Fig.6), which practically at the same moment T3 turns on the air exhaust unit. At the moment T4 the controller first turns on the air supply (recirculation) element for previously allocated contaminated air (for example, a pulse micropump, mounted in the duct and connecting the path of already selected air with nozzles directed at an acute angle "after" flow of the exhaled air) for cutting off and replacing portions of passenger's exhaled air with portion of inhaled air and then turns on the clean air supply unit.

As noted above, the air exhaust unit from the vehicle passenger compartment may be provided with elements for forming the exhaled air stream for the subsequent removal. The process of such formation is illustrated in Fig.8 that shows configuration of the air exhaust unit from the vehicle passenger compartment when it is used in a railway car or aircraft cabin or bus, where passenger seats 43 are placed one after another. The right injection nozzles 44 are arranged in headrests of the passenger seats 43, injection nozzles 45 from the opposite side of the seats may be mounted on the interior walls, while the nozzles 44 and 45 are directed in a way to guide the air flow 46 exhaled by passengers and send it to outlets 47 located in the lower part of the backrest the forward seat 43 and connected via the corresponding ducts 48 with air venting pipeline, after that an exhaust fan 49 is set. The air outlet direction of the nozzles 44, 45 is indicated by arrows (about mark 58 see below).

If the nozzles 44, 45 are supplied with air from the vehicle interior then the air supply to the vehicle interior is made by other tools, provided separately. However, if you combine the air supply tools to the vehicle interior with the elements of formation for the subsequent removal of the passenger's exhaled air, an extra energy saving will be achieved. Which of the two embodiments or operation modes to choose when both of them are possible to be configured in a vehicle - it depends on operating conditions, composition of the ambient air at the moment. The decisions are taken by vehicle designers or by the controller, wherein the controller needs only determine whether the volume of outside air supply is sufficient to replace the exhaled amount at the moment. If it is sufficient, the controller adjusts the air flow by changing the mode of supply fans and damper position (not shown in Fig. 8) and delivers outside air to the nozzles 44, 45, if not - a mixture of outside and interior air from the vehicle passenger compartment or only the interior air or air from a collector of just selected polluted air (and, of course, the latter re-enters the air intake and air outlet tools is thrown out or is fed to the recovery). It should be noted that tools [and methods] for this purpose are widely known and used in vehicle climate control system .Moreover, the known means and algorithms for constructing vehicle climate control system easily allow to synthesize controls in the claimed proposal in application to any of the algorithms discussed above (embodiment of system construction), and combinations thereof.

Fig.8 also shows configurations of a duct systems with a matrix or a periodic structure. It makes sense for buses' interiors, aircraft compartments and sit-down train wagons as well as for large rooms. In this case the air exhaust/air supply to the passenger seats is provided individually via flexible air ducts, the collection /distribution of air to/from them is made via duct collectors 51, having a larger cross-section. The structure of the ducts is shown in Fig.8 for the longitudinal rows of passenger seats 43 is called "periodical" by us; if we consider two adjacent rows of passenger seats 43 separated by a passage from the same three rows of seats 43 (in case of a cabin of a aircraft), this structure we call "matrix". Of course, the same names and configuration, respectively, may be applied to transverse rows of the passenger seats 43. In other words, the structure of distribution / intake of air for longitudinal or transverse row above is named periodic and if there is a few such series, then it is called matrix, and, of course, one or another member of the matrix may be absent, permanently or temporarily switched off due to absence of a passenger seat or a vacant seat at the moment. It is only essential that the duct system should provide an individual, i.e. belonging to an individual occupied passenger seat air exhaust and air supply if the latter is designed in this ventilation system and does not belong to the main cabin ventilation.

The following table summarizes the embodiments and position of the air intakes 52 (9), the ducts 53 connecting the air intake inlets 52 with fittings 54 connected to the air exhaust system and air supply as well as placement of air intake louvers or inlets 55.

**Table**

| Outlets (Exhaust air intakes) | Air ducts | Fittings | Inlets (Air intakes) |
|---|---|---|---|
| A seat belt 30 | Along the seat belt 30 or in its structure | At an anchor point or a hanger bracket (lock) of the seat belt 30 (57 and 58 respectively) | Inlets(vent holes 55 may be arranged at the top (on the ceiling) and / or from the side (lateral pillar between doors, windows) |
| A steering wheel 31 (a central part, spokes, an inner part) | Inside the cavity of the column of the steering wheel 31 | In the bottom of the column of the steering wheel 31 | The inlets (vent holes) 55 may be arranged at the top (on the ceiling) and / or from the side (lateral pillar between doors, windows) or in the rear of the headrest of the passenger seat |
| The front part of the passenger seat 43 or the upper part of the backrest of the passenger seat 43 for the rear passengers | Inside the seat or the backrest of the passenger seat 43 respectively | Under the passenger seat 43 | The inlets (vent holes) 55 may be arranged at the top (on the ceiling) and / or from the side (lateral pillar between doors, windows) or in the rear of the headrest of the passenger seat |
| A dashboard 56 | Inside the cavity of the dashboard 56 | Inside the cavity of the dashboard 56 from the side of the engine | The inlets (vent holes) 55 may be arranged at the top (on the ceiling) and / or from the side (lateral pillar between doors, windows) |
| A cushion (a toy) 40 on the lap of the passenger or driver | Inside the cavity of the cushion 40 | Under the passenger seat 43 (position 54) | The inlets (vent holes) 55 may be arranged at the top (on the ceiling) and / or from the side (lateral pillar between doors, windows) |

Therefore the second embodiment of the claimed ventilation system provides the interior insulation of the passenger compartment from outside air inflow for long time periods when the outside air is highly polluted. This is achieved not by additional inflow of oxygen but by means of removing carbon dioxide and other products that are targets for extracting from the recirculation air.

If we speak about a seat belt, the ventilation elements which are designed as outlets/inlets and ducts for air exhaust/supply may be constructively arranged in the seat belt's structure without breaking its strength. They may also be made in the form of overlaid elements. In this case, the seat belt acts as a supporting structure and when it is fastened (or free hanging aside), it may place these elements in correct position relative to the respiratory system of the passenger.

As mentioned above, these elements may be configured to adapt the operation to a respiratory rate of a passenger sitting in this seat.

As an example we may consider layers that have the possibility of some limited mutual movement, which depending on the tension may cause the overlap of certain holes, i.e. if the passenger sat down, fastened the belt and, for example, pressed the latch at the moment of inhalation so that the shear valve got set to open inlets and close outlets respectively, the above described method begins to track the movement of the chest on the belt tension. Either the inlets may be generally placed above the passenger and on the side of him/her, on the belt anchor assembly and run continuously, feeding fresh air into the nasal area, and the outlets may be overlapped only for selective absorption of exhaled products. The control of pumping operation and the air inflow may be also configured based on a periodic change in the concentration of carbon dioxide (CO2) and / or H2O (sensors may be positioned, for example, in the side belt attachment in the zone near a lock or near the belt attachment in a pillar - where the coming of the exhalation products is ensured).

A seat belt with ventilation elements like outlets and ducts for air exhaust and / or air supply may be configured with flow (stream) forming elements and/or structural elements, improving the proportion of expiratory product selecting, including a plastic bib with a curved edge.

A similar air outlet element in the form of a "basket" of nozzles may be placed at the bottom (lower part) of the steering wheel and adapted to distributing ducts through the steering wheel and steering column either with no sensors at all or with a sensor of changes of belly (lower thorax ?) position of the driver or passenger of the following types:
mechanical type (for example, in form of a fringe of elastic strips concerning the front part of the thorax (body));
optical (by analogy with autofocus in cameras);
ultrasound (to measure changes in the distance on the reflection);
and others.

The same air outlet element may be formed as a skirt on the seat or in protruding edge of seat that is in direction from the nose of the passenger vertically down, wherein the ducts are provided (delivered) through seat anchorages, and to the above sensors we may add the simple optical one, responsive, for example, to changes of shadows created by the front part of the body in process of moving the thorax and abdomen from the light source located on top.

All the above-mentioned systems and many others can be constructed on based on the essence of the invention and examples, wherein all of them - be it a seat belt of the passenger car with elements of ventilation or the units to exhaust (extract) the exhaled air portions with appropriate air duct system and control system for a vehicle interior with rows of seats - may be characterized in that the ventilation system comprises the means of air exhaust configured to extract exactly the air polluted by products of respiration, wherein their air outlets are located in a zone of spreading of exhaled air flow (immediately or of the air directed to the mentioned outlets). This particular feature provides a higher degree of autonomy and efficiency of the ventilation system.

In conclusion, it should be noted that in vehicles with regular ventilation systems an inflow is directed longitudinally from vehicle's front to its back and the supplied air flows "sweep away", capture the portions of air exhaled by passengers. In the claimed system the latter reaches the outlets without a hitch and if the air inflow directed from the top down and from the side (and from back to front) even crosses the extracted streams, it is only to displace them to the air outlets. The aforesaid will be further explained in more detail: a traditional concept of vehicle ventilation and a configuration of air supply and exhaust devices are actually longitudinal. This means that an inflow is performed from the front (often from bottom and front) or as a common one or individual one. While the exhaust (extraction from the interior) is always general and performed by one or two air vents with valves at the rear part of passenger compartment or luggage compartment (in passenger cars such vents are located in the rear bumper area). Thus the air masses move longitudinally relative to the horizontal axis of the vehicle interior and across the interior.

In the claimed invention the configuration is radically changed. Firstly, in the mode of limited air supply or quasi-autonomous operation of ventilation system the air supply is performed either from the top or from the top at an angle or from the side and still from the top, since the air supply level for the lateral inflow should be above the passenger's nose level not to disturb the air extraction if the above-described synchronization is not performed to separate in time the steams of supplied air and exhalation, and finally the air supply may be performed even from back (i.e. opposite to the usual direction). In this single case it needs not be located relatively high, especially if the outlets are also located not at the bottom but in front of the passenger's face. As a result, the free movement of air masses is largely top-down or back-to-forth in the vehicle interior what is opposite to the usual direction but at the same time it is physiologically reasonable and comfortable for passengers and a driver (while the air flows can move inside the ducts in all directions, including traditional "front to back" that is solely defined by location of outside units of a vehicle (an external inflow rod, an outlet and so on.).

In other words, the positive effect claimed in the invention is achieved not so much due to automation of the ventilation system by analyzing the air composition and controlling the process of air refresh or not only due to the adaptation to the respiration rhythm of passengers and a driver, but also due to the appropriate configuration of the means (which is different from traditional solutions) and targeted exhaust of air portions with maximum concentration of exhalation products.

## Claims

1. A vehicle ventilation system comprising
• a sensing element;
• the means of air exhaust from an interior of a vehicle;
• the means of air supply to the interior of the vehicle;
• controls of the said means by using a signal of the sensing element;
and **characterized in that** the sensing element is configured to detect an exhalation of the passengers and the means of air exhaust are configured to remove mainly the exhaled portion of air.

2. The system according to claim 1, **characterized in that** the means of air exhaust from the interior of the vehicle and the means of air supply to the interior of the vehicle are configured to adapt to the respiratory rate of passengers and/or to the delay in the spreading of the exhaled and inhaled portions of air.

3. The system according to claim 2, **characterized in that** the sensing element is formed by a group of sensors of CO2 and/or O2 and/or humidity and/or pressure and/or infrared radiation and/or temperature and/or sound and ultrasonic waves and by a video camera or a superimposed accelerometer.

4. The system according to claim 3, **characterized in that** the sensors of the group are provided with an output filter tuned to the respiratory rate bandwidth.

5. The system according to claim 1, **characterized in that** the means of air exhaust from the interior of the vehicle comprise the forming elements to exhaust subsequently an exhaled portion of air.

6. The system according to claim 1, **characterized in that** the means of air supply to the interior of the vehicle are arranged as the forming elements to exhaust subsequently an exhaled portion of air.

7. The system according to claim 1, **characterized in that** the means of air supply to the interior of the vehicle are configured to replace only a portion of air exhaust from the interior of the vehicle using the means of air exhaust.

8. The system according to claim 1, **characterized in that** the means of air supply to the interior of the vehicle comprise an input analyzer of ambient air composition which is connected to the controls of the means of air supply to the interior of the vehicle.

9. The system according to claim 8, **characterized in that** the controls of the means of air supply to the interior of the vehicle are configured to receive, record and transmit information about the ambient air composition to the similar units of other vehicles.

10. The system according to claim 1, **characterized in that** it comprises the means to recognize a current state of health of passengers using the signals from sensors of the sensing element and also the means to respond to the dangerous state of health.

11. The system according to claim 1, **characterized in that** the means of air supply to the interior of the vehicle have an inlet for ambient air which is located above the upper element of the vehicle's body.

12. The system according to claim 1, **characterized in that** the means of air supply to the interior of the vehicle comprise an inlet for ambient air which is located on a movable element and the controls of the means of air supply to the interior of the vehicle are configured to adjust the position of the movable element in dependence on the composition of the ambient air and/or the vehicle's speed.

13. The system according to claim 1, **characterized in that** the means of air supply to the interior of the vehicle are configured to store air or oxygen and the controls of the means of air supply to the interior of the vehicle are configured to replenish and to dose a supply from a storage reservoir for air (oxygen).

14. The system according to claim 1, **characterized in that** the controls of the means of air exhaust from the interior of the vehicle, the controls of the means of air supply to the interior of the vehicle, the means to adapt to the rhythm of respiration of passengers and/or to the delay in spreading of exhaled and inhaled portions of air, the controls of forming elements and of subsequent exhaust of the air stream exhaled by passengers, the means of choosing and analyzing information from the group of sensors, the means of filtering the output information from the group of sensors, the means to process the information from the analyzer of ambient air composition and the means to recognize a current state of health of passengers based on sensing element signals can be combined into a controller configured to analyze a portion of air exhaled by passengers, to analyze the composition of ambient air and the air in the interior of the vehicle and to make a decision on the moment of exhaust and on the amount of exhaust air portion and its replacement with a portion of ambient and/or regenerated air.

15. The system according to claim 14, **characterized in that** the controller is a part of the controller managing a climate control system of the vehicle.

16. The system according to claim 14 or 15, **characterized in that** the controller is configured to provide a driver with recommendations on changing a distance or a route based on the data from the sensors of the ambient air composition analyzer or external sources.

17. A vehicle ventilation system comprising the means of clean air supply and the means of air exhaust and **characterized in that** the means of air exhaust are configured to remove the air polluted by products of respiration and their air intakes are located in the zone of spreading of an exhaled air stream.

18. The system according to claim 17, **characterized in that** the means of clean air supply are located primarily above the respiratory organs of passengers and directed to them from behind and/or from the top and/or at an acute angle to the vertical and the means to exhaust the air polluted by products of respiration are located below the respiratory organs of passengers.

19. The system according to claim 17 or 18, **characterized in that** the means of clean air supply are provided with a filter for microparticles and/or chemical air pollutants.

20. The system according to claim 17, **characterized in that** the air intakes of the means to exhaust the air polluted by the products of respiration are located on a safety belt and/or on a steering wheel and/or the steering wheel cover and/or on the front side of a seat and/or on a dashboard of the vehicle and are connected with the corresponding means of exhaust via a duct system.

21. The system according to claim 17, **characterized in that** the air intakes of the means to exhaust the air polluted by the products of respiration are located on the back of a seat as well as on decorative elements of the interior of the vehicle or on holders located in the zone of spreading of the exhaled air stream and connected with the corresponding means of exhaust via a duct system.

22. The system according to claim 20 or 21, **characterized in that** the duct system is configured with a matrix and/or periodic structure.

23. The system according to any of claims 17, 19-21, **characterized in that** the means of clean air supply are located on a vehicle ceiling or in the pillars and are directed primarily from the top to the bottom or from the side.

24. The system according to any of claims 17, 18, 20 or 21, **characterized in that** the zone of spreading of the exhaled air stream is formed by the means of stream formation located in the zone of immediate spread of the exhaled air stream.

25. The system according to claim 24, **characterized in that** the means of stream formation are configured as the elements of the means of clean air supply or as the elements of the means of recirculation of already extracted or ambient air.

26. The system according to claim 17, **characterized in that** the air intakes are located in the zone of spreading of the exhaled air stream which belongs to nasal and/or mouth type of breathing.

27. The system according to claim 17, **characterized in that** the means to exhaust the air polluted by the products of respiration are made with the possibility of periodic actuation.

28. The system according to claim 27, **characterized in that** the means to exhaust the air polluted by the products of respiration are controllable and the ventilation system is provided with a respiration sensor connected to a control input of the mentioned means.

29. The system according to claim 28, **characterized in that** the respiration sensor is made in the form of CO2 sensor or humidity sensor, pyrometer or video camera with a processor for image processing.

30. The system according to claim 28, **characterized in that** the respiration sensor is a respiration rate meter.

31. The system according to claim 17, **characterized in that** the controls of the means of air supply are configured to receive, record and transmit information about ambient air composition to the corresponding units of other vehicles.

32. The system according to claim 17, **characterized in that** it is provided with the means to recognize a current state of health of passengers based on signals from the sensing element and with the means to respond to a dangerous state of health.

33. The system according to claim 17, **characterized in that** the means of clean air supply comprise an inlet and/or a duct for ambient air located at least 1.2m above the road surface level in particular at a telescopic tube, antenna, on a rod or a cover located at the roof of the vehicle.

34. The system according to claim 17, **characterized in that** the means of air supply have an inlet for ambient air located at a movable element configured to adjust the position in dependence on the ambient air composition and/or the vehicle speed.

35. The system according to claim 17, **characterized in that** the means of air supply are configured to store air or oxygen or oxygen-nitrogen mixture and to replenish and dose a supply from a storage reservoir for air or oxygen or oxygen-nitrogen mixture.

36. The system according to claim 17, **characterized in that** it is configured with a control input of automatic switch-on by signal from an analyzer of ambient air, lighting, by signal from the accelerometer, video camera or speedometer.

37. The system according to claim 17, **characterized in that** at least two of the following elements:
• the means to switch on/switch off the ventilation system as a whole;
• the controls of the means of air exhaust from the interior of the vehicle;
• the controls of the means of air supply to the interior of the vehicle;
• the means to adapt to the rhythm of respiration of passengers and/or to the delay in spreading of exhaled and inhaled portions of air;
• the controls of forming elements and subsequent exhaust of the air stream exhaled by passengers;
• the means of choosing and analyzing information from the group of sensors,
• the means of filtering the output information from the group of sensors;
• the means to process the information from the analyzer of ambient air composition and the means to recognize a current state of health of passengers based on sensing element signals
are combined into the controller managing an operation of the ventilation system or are that part of the controller managing an operation of the climate control system of the vehicle as a whole which manages an operation of the ventilation system.

38. The system according to claim 37, **characterized in that** the controller is configured to provide a driver with recommendations on changing a distance or a route based on the data from the analyzer of the ambient air composition or external information about the environmental pollutions.
